# EUROPÄISCHE PATENTSCHRIFT

(11) **EP 1 892 938 B1**
(45) Veröffentlichungstag und Bekanntmachung des Hinweises auf die Patenterteilung: **11.09.2013**
(21) Anmeldenummer: 07014423.3
(22) Anmeldetag: 23.07.2007
(51) Int. Cl.: H04M 3/42, H04M 3/493

(54) **Herstellen einer Verbindung zu einem gerufenen Teilnehmer der über mehrere Endgeräte erreichbar ist**
Establishing a communication to a called party that is accessible via several terminals
Établir une communication à une appelé qui est accessible par plusieurs terminaux

(30) Priorität: 24.08.2006 DE 102006039663
(43) Veröffentlichungstag der Anmeldung: 27.02.2008
(73) Patentinhaber: Deutsche Telekom AG, 53113 Bonn (DE)
(72) Erfinder: Daußmann, Frank, 67454 Haßloch (DE); Trinkel, Marian, 52372 Kreuzach OT Untermaubach (DE)
(74) Vertreter: Cohausz Hannig Borkowski Wißgott

(56) Entgegenhaltungen:
- EP-A- 0 608 654
- US-A1- 2003 185 360
- US-A1- 2005 201 362
- US-B1- 6 807 423
- US-B1- 6 970 553

## Beschreibung

Die Erfindung betrifft ein Verfahren und System zur Durchführung einer Telekommunikation eines ersten Kommunikationsteilnehmers mit einem zweiten Kommunikationsteilnehmer über wenigstens ein Telekommunikationsnetzwerk, wobei dem zweiten Kommunikationsteilnehmer wenigstens zwei Netzwerkkennungen zugeordnet sind, über die der zweite Kommunikationsteilnehmer in einem Telekommunikationsnetzwerk erreichbar ist.

Verfahren und Systeme der vorgenannten Art sind im Stand der Technik bekannt. Beispielsweise sind verschiedene Telekommunikationsnetzwerke bekannt, über die Kommunikationsteilnehmer mit darin zugeordneten Netzwerkkennungen erreichbar sind. Darüber hinaus können auch bezogen auf nur ein einzelnes Telekommunikationsnetzwerk den Kommunikationsteilnehmern mehreren Netzwerkerkennungen zugeordnet sein, über die jeweils eine Erreichbarkeit, gegebenenfalls vermittels unterschiedlicher Kommunikationsmedien bzw. Geräten gegeben ist.

So ist es beispielsweise mit Bezug auf das Telefonfestnetz bekannt, dass ein Kommunikationsteilnehmer beispielsweise in üblicher Weise mittels eines normalen Telefonanschlusses und ebenso mittels eines Faxanschlusses erreichbar sein kann, wobei diesen beiden Anschlussarten jeweils unterschiedliche Netzwerkkennungen zugeordnet sind. Darüber hinaus kann es vorgesehen sein, dass in diesem selben Telefonfestnetz der Kommunikationsteilnehmer weitere Netzwerkkennungen zur Durchführung von Telefonie zugeordnet sind. Bezogen auf das für die Festnetztelefonie eingesetzte Telekommunikationsnetzwerk werden die verwendeten bzw. zugeordneten Netzwerkkennungen auch als CLI bzw. Calling Line ldentity bezeichnet.

Ebenso können einem Kommunikationsteilnehmer weitere Netzwerkkennungen bezüglich anderer Telekommunikationsnetzwerke zugeordnet sein, wie beispielsweise bezogen auf das Mobilfunknetz, eine Netzwerkkennung bezüglich eines Mobiltelefons, insbesondere welche üblicherweise auch als HLR bzw. Home Location Register bezeichnet wird. Auch hier kann ein und derselbe Kommunikationsteilnehmer gegebenenfalls mehrere Netzwerkkennungen zugeordnet bekommen. Ebenso können zu einer Netzwerkkennung mehrere Gerätekennungen vorliegen. Bezogen auf das Internet kann ein Kommunikationsteilnehmer beispielsweise eine E-Mail-Adresse haben oder eine sonstige bestimmte Adresse, insbesondere die bezogen auf das Internet auch als IP-Adressen bezeichnet werden.

Sämtliche vorgenannten beispielsweise genannten Netzwerkkennungen ein und desselben oder auch unterschiedlicher Telekommunikationsnetzwerke werden als Netzwerkkennungen im Sinne dieser Erfindung bezeichnet. Es handelt sich somit um jegliche Art einer Kennung, mittels der ein Kommunikationsteilnehmer beziehungsweise ein von ihm eingesetztes Telekommunikationsgerät in einem Telekommunikationsnetzwerk eindeutig identifizierbar ist.

Es ist durch die vorgenannten Anmerkungen somit ersichtlich, dass ein und derselbe Telekommunikationsteilnehmer gegebenenfalls eine Vielzahl von Netzwerkkennungen zugeordnet bekommen hat, mittels derer er bzw. ein von ihm gehandhabtes Telekommunikationsgerät durch andere Kommunikationsteilnehmer anwählbar ist, um eine Telekommunikatiönsverbindung aufzubauen und somit eine Kommunikation jeglicher Art, sei es eine Sprach-, Daten- oder sonstige Kommunikation durchzuführen.

Es ist weiterhin im Stand der Technik bekannt, dass die Problematik besteht, einen gewünschten Kommunikationsteilnehmer, z. B. nicht erreichen zu können. Diese Problematik kann auftreten, wenn ein erster Kommunikationsteilnehmer eine ihm bekannte Netzwerkkennung eines zweiten Kommunikationsteilnehmers anwählt, um den zweiten Kommunikationsteilnehmer unter dieser Netzwerkkennung zu erreichen. Hierbei kann es vorkommen, dass der zweite Kommunikationsteilnehmer den Kommunikationswunsch, insbesondere der z. B. an einem der Netzwerkkennung zugeordneten Kommunikationsgerät angezeigt wird, nicht wahrnimmt und somit eine Kommunikation nicht zustande kommt.

Ebenso kann es auftreten, dass der angewählte Kommunikationsteilnehmer unter der gewünschten bzw. angewählten Netzwerkkennung bereits eine Kommunikation mit einem anderen Kommunikationsteilnehmer durchführt, so dass die Kommunikationsverbindung bereits besetzt ist.

In den vorbeschriebenen Fällen kann es dabei vorgesehen sein, dass der anrufende erste Kommunikationsteilnehmer z. B. mit einer sogenannten Mailbox verbunden wird, um eine Nachricht aufzusprechen oder aber dass der erste Kommunikationsteilnehmer lediglich eine Mitteilung über die Nichterreichbarkeit des zweiten Kommunikationsteilnehmers erhält, oder selbst eine Nachricht aufsprechen zu können.

Es ist im Stand der Technik auch weiterhin bekannt, dass ein zweiter Kommunikationsteilnehmer für den Fall, dass er unter einer bestimmten Netzwerkkennung nicht erreichbar ist, eine so genannte Rufweiterleitung einrichtet, was bedeutet, dass automatisch in dem Fall, wenn auf einer bestimmten Netzwerkkennung ein Kommunikationsgesuch eines ersten Kommunikationsteilnehmers eingeht, diese gewünschte Kommunikationsverbindung weitergeleitet wird an eine alternative Netzwerkkennung desselben zweiten Kommunikationsteilnehmers. Der erste Kommunikationsteilnehmer hat dabei jedoch üblicherweise keinen Einfluss darauf, ob eine solche Rufweiterleitung gespeichert ist, so dass es im Belieben des zweiten Kommunikationsteilnehmers liegt, ob ein erster Kommunikationsteilnehmer einen gewünschten zweiten Kommunikationsteilnehmer oder eine alternative Netzwerkkennung erreichen kann oder nicht. Vergisst daher z.B. ein zweiter Kommunikationsteilnehmer, obwohl ihm die Möglichkeiten offen stehen, eine Rufweiterleitung zu schalten, so ist der zweite Kommunikationsteilnehmer gegebenenfalls nicht für einen ersten angerufenen Kommunikationsteilnehmer erreichbar, obwohl eine Erreichbarkeit grundsätzlich gegeben sein könnte.

Als Stand der Technik sind u.a. auch die Druckschriften EP 0 608 654, US 2003/185360 sowie US 6 970 553 anzusehen.

Die Aufgabe der Erfindung ist es, die vorgenannten im Stand der Technik bekannten Nachteile zu überwinden und ein Verfahren und ein System bereitzustellen, mit denen eine verbesserte Erreichbarkeit von Kommunikationsteilnehmern gewährleistet wird.

Diese Aufgabe wird gemäß der Erfindung gelöst durch ein Verfahren, bei welchem dem zweiten Kommunikationsteilnehmer wenigsten zu einer seiner Netzwerkkennungen zumindest zeitweise-ein interaktives Dialogsystem, insbesondere ein Sprachdialogsystem, zugeordnet wird, mittels dessen ein erster Kommunikationsteilnehmer durch Dialog die Vermittlung von einer zunächst angewählten Netzwerkkennung des zweiten Kommunikationsteilnehmers auf eine andere alternative Netzwerkkennung bewirkt.

Die Aufgabe wird weiterhin gelöst durch ein System der gattungsgemäßen Art, bei dem in einem Telekommunikationsnetzwerk ein interaktives Dialogsystem, insbesondere Sprachdialogsystem, vorgesehen ist, welches dem zweiten Kommunikationsteilnehmer, wenigstens zeitweise, zu einer seiner Netzwerkkennungen zugeordnet ist und mittels dessen von einem ersten Kommunikationsteilnehmer durch Dialog die Vermittlung von einer zunächst angewählten Netzwerkkennung des zweiten Kommunikationsteilnehmers auf eine andere alternative Netzwerkkennung bewirkbar ist.

Wesentlicher Kerngedanke des erfindungsgemäßen Verfahrens bzw. Systems ist es, dass einem ersten Kommunikationsteilnehmer, der versucht eine Verbindung zu einem gewünschten zweiten Kommunikationsteilnehmer aufzubauen, die Gelegenheit gegeben wird, vermittels eines Dialogsystems, wie beispielsweise eines Sprachdialogsystems, die Vermittlung statt zu einer zunächst angewählten ersten Netzwerkkennung auf eine andere alternative Netzwerkkennung zu bewirken.

So kann der erste Kommunikationsteilnehmer, ohne dass z. B. der zweite Kommunikationsteilnehmer aktiv eine Rufumleitung für alle eingehenden Kommunikationsanfragen initiiert hat, entscheiden, ob er versuchen möchte, einen zweiten Kommunikationsteilnehmer vermittels einer anderen alternativen Netzwerkkennung zu erreichen, insbesondere wenn es nicht gelingt, den Kommunikationsteilnehmer über die zunächst angewählte Netzwerkkennung anzuwählen.

Hierbei kann es erfindungsgemäß vorgesehen sein, dass ein solches Dialogsystem, wie z. B. ein Sprachdialogsystem, in wenigstens einem Telekommunikationsnetzwerk angeordnet ist, gegebenenfalls auch in mehreren Telekommunikationsnetzwerken angeordnet ist, insbesondere wenn die einem zweiten Kommunikationsteilnehmer zugeordneten Netzwerkkennungen sich nicht nur auf ein, sondern gegebenenfalls auf mehrere Telekommunikationsnetzwerke beziehen.

Ein solches Dialogsystem kann z. B. durch eine Software realisiert sein, die auf einer Datenverarbeitungsanlage abläuft, wie beispielsweise auf einem Server einer Vermittlungsstelle. Es kann sodann beispielsweise vorgesehen sein, dass ein bei einer Vermittlungsstelle einlaufender Versuch einer Telekommunikationsverbindung aufzubauen, weitergeleitet wird an das Dialogsystem, um einem ersten Kommunikationsteilnehmer eine alternative Anwahl zu Verfügung zu stellen.

Hierbei kann es erfindungsgemäß vorgesehen sein, dass das erfindungsgemäße System, Verfahren innerhalb und/oder mittels einer Sprachbox ausgeführt ist und/oder innerhalb einer Sprachbox eingebettet ist.

Hierbei kann es z. B. im Rahmen der Erfindung vorgesehen sein, dass der Aufruf des Dialogsystems, z. B. der Aufruf der oben besagten Software, bedingungslos immer erfolgt, also z. B. dem ersten Kommunikationsteilnehmer bei Anwahl einer der möglichen Netzwerkkennungen eine Information über alternative Netzwerkkennungen übermittelt wird, so dass der erste Kommunikationsteilnehmer aus den übermittelten Netzwerkkennungen aussuchen kann, um den gewünschten Weg der Kommunikation zu bestimmen.

In einer anderen Ausführung kann es auch vorgesehen sein, dass das Dialogsystem immer nur dann aufgerufen wird, sofern der zweite Kommunikationsteilnehmer unter der von dem ersten Kommunikationsteilnehmer angewählten Netzwerkkennung nicht erreichbar ist.

So wird also normalerweise bei einer Erreichbarkeit die Vermittlung auf die zunächst angewählte Netzwerkkennung bewirkt, so dass bei einer bewirkten Vermittlung ein erster Kommunikationsteilnehmer nicht an das Dialogsystem weitergeleitet bzw. dieses nicht aufgerufen wird. Erst im Fall, wenn die Vermittlung nicht zustande kommt, kann es vorgesehen sein, dass das Dialogsystem aufgerufen wird, wobei es gemäß der Erfindung weiterhin vorgesehen sein kann, dass zunächst der Versuch einer Vermittlung zu der ersten angewählten Netzwerkkennungen durchgeführt wird, wobei dann in dem Fall, wenn der Versuch fehlschlägt, das Dialogsystem aufgerufen wird.

Unter einem Fehlschlag kann dabei z.B. verstanden werden, dass bei einem Kontaktversuch nach einer gewissen Zeit abgebrochen wird, wenn der zweite gewünschte Kommunikationsteilnehmer das der angewählten Netzwerkkennung zugeordnete Kommunikationsgerät nicht zur Entgegennahme des Kommunikationsversuchs bedient. Es kann ebenso vorgesehen sein, dass dem Telekommunikationsnetzwerk intern eine Information darüber vorliegt, unter welchen Netzwerkkennungen ein Telekommunikationsteilnehmer erreichbar ist oder nicht. Der voran genannte Versuch zum Aufbau einer Kommunikation unter der angewählten Netzwerkkennung kann somit von Anfang an unterbleiben und dem ersten Kommunikationsteilnehmer eine Alternative vorgeschlagen werden.

Es kann hierbei bei dem erfindungsgemäßen Verfahren vorgesehen sein, dass dem ersten Kommunikationsteilnehmer bei sämtlichen Ausführungen des erfindungsgemäßen Verfahrens die alternative Netzwerkkennungen konkret bekannt gegeben werden oder dass einem ersten Kommunikationsteilnehmer im Rahmen des Dialogs lediglich abstrakt mitgeteilt wird, dass der gewünschte Kommunikationsteilnehmer unter einer anderen Netzwerkkennung erreichbar ist, wobei die Anwahl dieser Netzwerkkennung angeboten wird, ohne dass dem ersten Kommunikationsteilnehmer die spezielle Netzwerkkennung bekannt wird.

Hierbei können die Kommunikationsadressen und besonders die alternativen Kommunikationsadressen einzeln und/oder in Gruppen und/oder gleichzeitig angesprochen und/oder vorgehalten werden.
Gemäß der Erfindung kann es vorgesehen sein, dass einer jeden Netzwerkkennung eines zweiten Kommunikationsteilnehmers jeweils ein vorgenanntes interaktives Dialogsystem zugeordnet ist. So kann demnach abhängig von der jeweils angewählten Netzwerkkennung ein unterschiedliches interaktives Dialogsystem, gegebenenfalls mit anderen Dialogmöglichkeiten aufgerufen werden, um dem ersten Kommunikationsteilnehmer eine alternative Weitervermittlung zu bieten.

Es kann ebenso im Rahmen der Erfindung vorgesehen sein, dass immer dasselbe Dialogsystem aufgerufen wird, unabhängig davon, welche Netzwerkkennung des zweiten Kommunikationsteilnehmers vom ersten Kommunikationsteilnehmer angewählt wird. Somit kann es sich z.B. um ein zentrales Dialogsystem handeln, welches in einem oder in mehreren Telekommunikationsnetzwerken realisiert ist, wobei eine Vermittlung zunächst auf das Dialogsystem immer dann vorgesehen ist, wenn eine Erreichbarkeit eines angewählten zweiten Kommunikationsteilnehmers, egal bezüglich welcher Netzwerkkennung nicht gegeben ist.

Mit diesem einen oder gegebenenfalls mehreren Dialogsystemen kann eine Liste zugeordnet sein oder zugeordnet werden mit wenigstens zwei Netzwerkkennungen eines zweiten Kommunikationsteilnehmers. So kann ein Dialogsystem über eine derartige Liste eine Information darüber erhalten, unter welchen alternativen Netzwerkkennungen ein Kommunikationsteilnehmer, hier insbesondere der angewählte zweite Kommunikationsteilnehmer, erreichbar ist. Eine solche Liste kann z.B. in einer dem einen oder den mehreren Dialogsystemen zugeordneten Datenbank gespeichert sein.

So kann insbesondere in dem Fall, wenn nur ein Dialogsystem vorgesehen ist oder zumindest nicht jedem Kommunikationsteilnehmer ein eigenes Dialogsystem zugeordnet ist, die Möglichkeit gegeben sein, bei Anwahl einer Netzwerkkennung eines gewünschten zweiten Kommunikationsteilnehmers ein Dialogsystem aufzurufen und beim Aufruf des Dialogsystems diesem die Liste bzw. einen auf die Liste weisenden Zeiger als Übergabeparameter zu übergeben, so dass bei dem Aufruf das Dialogsystem Informationen über die Liste bzw. die in der Liste gespeicherten Netzwerkkennungen erhält, über die ein zweiter Kommunikationsteilnehmer erreicht werden kann.

Es kann hierbei vorgesehen sein, dass eine Liste jeweils einer der Netzwerkkennungen eines zweiten Kommunikationsteilnehmers zugeordnet ist. Die Zuordnung kann beispielsweise bereits dadurch erfolgen, dass eine Netzwerkkennung innerhalb der Liste gespeichert ist. Dabei kann es auch vorgesehen sein, dass ein- und dieselbe Liste zu jeder der alternativen Netzwerkkennungen eines zweiten Kommunikationsteilnehmers zugeordnet ist, wobei es telekommunikationsnetzintern wiederum vorgesehen sein kann, dass zu jeder Netzwerkkennung eines zweiten Kommunikationsteilnehmers ein Zeiger gespeichert wird, der auf dieselbe Liste verweist, in der insbesondere alle möglichen Netzwerkkennungen des zweiten Kommunikationsteilnehmers gespeichert sind.

So ist es für das Telekommunikationssystem irrelevant, welche der alternativen Netzwerkkennungen eines zweiten Kommunikationsteilnehmers angewählt wird von einem ersten Kommunikationsteilnehmer, da über den Verweis mittels eines Zeigers mit dem Dialogsystem immer dieselbe Liste bzw. der Inhalt derselben Liste bekannt wird, um einem ersten Kommunikationsteilnehmer alternative Netzwerkkennungen konkret oder abstrakt im oben genannten Sinne vorzuschlagen.

Bezüglich sämtlicher möglicher Ausführungen kann es weiterhin vorgesehen sein, dass in einem Telekommunikationssystem eine Information über die aktuelle Erreichbarkeit des zweiten Kommunikationsteilnehmers bezüglich wenigstens einer seiner Netzwerkkennungen, besonders bevorzugt bezüglich aller seiner Netzwerkkennungen, gespeichert wird, z.B. in einer Liste oder Datenbank, insbesondere einer solchen Liste, die der oben genannten Liste entspricht.

So kann anhand dieser gespeicherten Erreichbarkeit zu einer Netzwerkkennung von einer Vermittlungsstelle oder dem aufgerufenen Dialogsystem entschieden werden, ob dem ersten Kommunikationsteilnehmer die Möglichkeit eingeräumt wird, eine Vermittlung zu einer alternativen Netzwerkkennung vorzunehmen. So wird dies insbesondere dann der Fall sein, wenn zu der von dem ersten Kommunikationsteilnehmer angewählten Netzwerkkennung in der Liste vermerkt ist, dass diese Netzwerkkennung aktuell nicht erreichbar ist, insbesondere aus welchem Grunde auch immer.
Ist dies der Fall, so kann dem ersten Kommunikationsteilnehmer eine Information über die Nichterreichbarkeit übermittelt werden, z.B. im Rahmen eines Sprachdialogs, wobei auch nachgefragt werden kann, ob eine alternative Verbindung zu einer anderen Netzwerkkennung vorgenommen werden soll. Hierbei können eine oder mehrere alternative Möglichkeiten zur Verbindungsaufnahme vorgeschlagen werden, wobei gegebenenfalls der erste Kommunikationsteilnehmer aus mehreren vorgeschlagenen Möglichkeiten auswählen kann.

Um eine Information über die Erreichbarkeit bezüglich einer Netzwerkkennung zur Verfügung zu stellen, kann es in einer Ausbildung der Erfindung vorgesehen sein, dass diese Information durch ein Telekommunikationsnetzwerk, insbesondere durch eine Vermittlungsstelle selbst generiert und gespeichert wird. Beispielsweise kann dies der Fall sein, sofern der zweite Kommunikationsteilnehmer einen der Netzwerkkennung zugeordneten Anschluss aktuell benutzt.

Bezogen auf ein Beispiel kann somit ein zweiter Kommunikationsteilnehmer seinen Telefonfestnetzanschluss aktuell nutzen, weil er ein Gespräch führt. Diese Belegung des Anschlusses ist der Vermittlungsstelle bekannt, so dass im Telekommunikationsnetzwerk durch die Nutzung dieses Anschlusses eine Information über die Erreichbarkeit dieses Anschlusses vorliegt, nämlich in dem Sinne, dass dieser Anschluss aktuell nicht erreichbar ist wegen Benutzung. Eine solche Information über die aktuelle Nichterreichbarkeit dieses speziellen Anschlusses zu der Netzwerkkennung kann somit gespeichert werden, so dass bei Anwahl dieser Netzwerkkennung ein erster Kommunikationsteilnehmer auf diese Nichterreichbarkeit hingewiesen wird und gegebenenfalls Alternativen vorgeschlagen werden.

In einer anderen Ausführung, die mit der vorgenannten Ausführung auch kombinierbar ist, kann es auch vorgesehen sein, dass eine zu einer Netzwerkkennung des zweiten Kommunikationsteilnehmers gehörende Information über die Erreichbarkeit durch den zweiten Kommunikationsteilnehmer speicherbar ist. Hierfür kann beispielsweise eine Benutzerschnittstelle vorgesehen sein, z.B. über das Internet, mittels der ein zweiter Kommunikationsteilnehmer auf die Informationen, insbesondere eine Liste oder Datenbank in einem Telekommunikationsnetzwerk zugreifen kann, um selbst eine Information über die Erreichbarkeit zu speichern. Es kann sich hierbei bei der Liste bzw. bei der Datenbank um die vorgenannte Liste bzw. Datenbank handeln, in der die alternativen Netzwerkkennungen des zweiten Kommunikationsteilnehmers gespeichert sind. Beispielsweise kann so ein zweiter Telekommunikationsteilnehmer für den Fall, dass er verreist, in der Liste vermerken, dass er unter seinem Festnetztelefonanschluss aktuell nicht erreichbar ist. Wird dieser sodann von einem ersten Telekommunikationsteilnehmer angewählt, so kann automatisch das Dialogsystem gestartet werden, um dem ersten Kommunikationsteilnehmer eine Weitervermittlung anzubieten.

Hierbei kann es vorgesehen sein, dass das Dialogsystem einem ersten Kommunikationsteilnehmer bei einer Nichterreichbarkeit nur solche alternativen Netzwerkkennungen des zweiten Kommunikationsteilnehmers angeboten erhält, zu der eine Erreichbarkeit in der Liste gespeichert ist. Andere Netzwerkkennungen, zu denen gegebenenfalls ebenfalls eine Nichterreichbarkeit gespeichert ist, werden somit durch das Dialogsystem erfindungsgemäß nicht berücksichtigt und nicht als alternative Vermittlungsmöglichkeit angeboten.

In einer weiteren Ausbildung des erfindungsgemäßen Verfahrens bzw. Systems kann es auch vorgesehen sein, dass das Dialogsystem in Abhängigkeit der Netzwerkkennung des ersten Kommunikationsteilnehmers aufgerufen wird. So kann beispielsweise systemintern eine Unterscheidung bezüglich der ersten anrufenden Kommunikationsteilnehmer erfolgen, z.B. in dem Sinne, dass das Dialogsystem nur bei bestimmten Kommunikationsteilnehmern aufgerufen wird, um eine alternative Vermittlung anzubieten.

Es kann somit zwischen den ersten Kommunikationsteilnehmern, die ein solches Alternativangebot erhalten sollen, selektiert werden. Eine solche Selektion kann hierbei bevorzugt von dem zweiten Kommunikationsteilnehmer vorgenommen bzw. gespeichert werden. Es ist somit im Rahmen des erfindungsgemäßen Verfahrens möglich, dass das Dialogsystem nur bei bestimmten gespeicherten ersten Kommunikationsteilnehmern aufgerufen wird bzw. in einer besonderen Ausführung, dass in einem Telekommunikationssystem, insbesondere zum Dialogsystem zugeordnet, eine Liste gespeichert ist, in der diejenigen Netzwerkkennungen von ersten Kommunikationsteilnehmern gespeichert sind, bei denen ein Aufruf des Dialogsystems unterbleiben soll.

Eine solche Liste kann somit eine Sperrliste darstellen, durch die all diejenigen Kommunikationsteilnehmer ausgeschlossen sind, die mit ihren jeweiligen Netzwerkkennungen in der Liste aufgeführt sind. Innerhalb der Liste können nicht nur die Kommunikationsdaten, Kennungen gespeichert werden, sondern auch weitere Parameter wie Sprachproben, Sprachparameter von Kunden.

So ergeben sich für einen zweiten Kommunikationsteilnehmer die Möglichkeiten, bestimmte Personengruppen von der Möglichkeit einer Weitervermittlung auszuschließen bzw. nur für bestimmte Personengruppe eine solche Weitervermittlung zuzulassen.

Dies kann z.B. derart erfolgen, dass wenn der Anrufer gerade auf die Sprachbox spricht, das das System dies erkennt aufgrund des Aufgesprochenen, und erkennt das dies zu einer weitervermittelten Personengruppe gehöriger ist - und diesen Anruf, z.B. auch mitten beim Aufsprechen weitervermittelt. Die Grunddaten einer solchen Liste können derart ermittelt werden, dass aus schon erfolgten Sprachboxaufzeichnungen eine Zuordnung der Sprecher erfolgt, unabhängig der Kommunikationsadresse und diese in einer späteren Anwendung findet. Dies hat den besonderen Vorteil, das der Sprecher nicht nur anhand der Kommunikationsadresse im System erkennbar ist, sondern direkt mittelt seiner Sprache - unabhängig von der Kommunikationsadresse.

In einer weiteren Ausbildung kann es erfolgen, dass aufgrund der Triggerung, z.B. Sprachen, Sprecher, Aussprachegeschwindigkeit, Sprachklangfarbe, Hintergrundgeräusche, Sprachlautstärke, Sprachnachträglich ein eigener Dialog angesteuert wird. Z.B. in der Landessprache des Sprechers und/oder mit einfachen Sprachwörtern und/oder dass der Dialog besonders einfach ist und/oder dass der Dialog auf die Emotionen des Anrufers eingeht und/oder Emotionen bewirkt und/oder der Dialog besonders laut ist und/oder der Dialog besonders langsam die Sprachpromps des Dialogs abspielt oder spricht.
In einer Weiterbildung kann es auch vorgesehen sein, dass zu einer in einer Liste/Datenbank gespeicherten Netzwerkkennung eines zweiten Kommunikationsteilnehmers, bevorzugt zu sämtlichen gespeicherten Netzwerkkennungen, wenigstens eine Netzwerkkennung wenigstens eines möglichen ersten Kommunikationsteilnehmers gespeichert ist.

So kann durch die Zuordnung der Netzwerkkennungen zueinander dem System angegeben werden, bei welchem ersten Kommunikationsteilnehmer welche alternative Netzwerkkennung des zweiten Kommunikationsteilnehmers während eines Dialogs zur alternativen Vermittlung angeboten wird oder eben nicht angeboten wird. Ein zweiter Kommunikationsteilnehmer kann somit im Rahmen der Erfindung jeder seiner ihm zugeordneten alternativen Netzwerkkennungen wiederum eine Liste zuordnen mit denjenigen Netzwerkkennungen von ersten Kommunikationsteilnehmern, für die er z.B. seine Netzwerkkennung für eine Vermittlung freigibt oder sperrt. So kann die Freigabe oder Sperrung von ersten Kommunikationsteilnehmern nicht nur wie in der vorgenannten Ausführung bezogen auf den Aufruf des Dialogsystems in seiner Gesamtheit erfolgen, sondern für jede einzelne alternative Netzwerkkennung des zweiten Kommunikationsteilnehmers jeweils separat.

In einer besonderen Ausführungsform kann auch erfindungsgemäß jedes Gespräch automatisiert an eine weitere Kommunikationsadresse parallel weitergeleitet werden z.B. zur automatischen Aufzeichnung und Dokumentation des Gespräches. Derart dass z.B. die Gespräche wie in einer Konferenzschaltung parallel auf die Sprachbox aufgezeichnet werden. Diese Aufzeichnung kann bei einem weiteren Anruf automatisiert wieder überschrieben werden und/oder für eine bestimmte Zeit und/ oder bis zu einem Triggerpunkt gespeichert werden.

Die Triggerung zur parallelen Weiterleitung kann z.B. aufgrund der Kommunikationsadresse und/oder der Sprachprobe, Sprechererkennung, Sprachenerkennung erfolgen. Dies hat den besonderen Vorteil, dass nicht alle Gespräche aufgezeichnet werden, sondern nur solche die den Triggeranforderungen entsprechen. Dies kann beispielhaft bei Notfall-Rufnummern eingesetzt werden, damit ausländische Hilfesuchende auch verstanden werden, erfolgt die automatische Weiterleitung aufgrund der Sprachenerkennung, zum Dolmetscher für diese Sprache.

Im Rahmen der Erfindung kann es weiterhin vorgesehen sein, dass eine Weitervermittlung zu einer alternativen Netzwerkadresse des zweiten Kommunikationsteilnehmers dem ersten Kommunikationsteilnehmer in Rechnung gestellt wird, insbesondere wobei vor einer Weitervermittlung eine Rückfrage beim ersten Kommunikationsteilnehmer erfolgt. Dieser wird somit über die Möglichkeiten der Weitervermittlung informiert und kann selber entscheiden, ob er eine solche Weitervermittlung, gegebenenfalls gegen zusätzliche Gebühren wünscht oder ablehnt.

Bezogen auf sämtliche Ausführungen der vorgenannten Erfindung kann es vorgesehen sein, dass bei einer Weitervermittlung auch ein Medienbruch stattfindet. Hierbei wird unter einem Medienbruch verstanden, dass eine mit einer bestimmten Gattung von Kommunikationsgeräten bei einem ersten Kommunikationsteilnehmer initiierten Telekommunikationsversuch die Weitervermittlung an ein Gerät des zweiten Kommunikationsteilnehmers erfolgen kann, welches nicht derselben Gattung von Kommunikationsgeräten entspricht.

Dies kann beispielsweise bedeuten, dass beim Versuch des Verbindungsaufbaus mittels eines normalen Festnetztelefons durch den ersten Kommunikationsteilnehmer eine Weitervermittlung, z.B. an ein Faxgerät oder eine E-Mail-Adresse des zweiten Kommunikationsteilnehmers erfolgt. Hierbei kann es vorgesehen sein, dass durch das Dialogsystem der Medienbruch ermöglicht wird, in dem Sinne, dass eine Konversion zwischen den verschiedenen Kommunikationsgeräten durchgeführt wird.

Beispielsweise kann mittels des Dialogsystems ein erster Kommunikationsteilnehmer aufgefordert werden, einen bestimmten Text zu sprechen, so dass dieser konvertiert und z.B. als Fax oder als E-Mail einem zweiten Kommunikationsteilnehmer oder gegebenenfalls auch als SMS auf ein Mobiltelefon zur Verfügung gestellt wird. Ebenso kann es in umgekehrter Ausführung vorgesehen sein, dass z.B. eine E-Mail, sofern ein zweiter Kommunikationsteilnehmer aktuell nicht per E-Mail erreichbar ist, automatisch bzw. nach einem Dialog mit dem ersten Kommunikationsteilnehmer gewandelt wird in gesprochenen Text und dem Kommunikationsteilnehmer z.B. vorgesprochen wird, an einem Festnetz- oder einem Mobiltelefon nach einer entsprechenden Weitervermittlung auf die alternative Netzwerkkennung.

Dies kann in einer besonderen Ausführungsform auch zu einem Push-Service ausgestaltet sein, derart dass z.B. die sprachliche Information, zu einer hinterlegten Liste vermittelt werden und gleichzeitig alle Medienformen berücksichtigt. z.B. Sprache, SMS, Text, FAX. Dieser Service kann für private Zwecke, zur Kommunikationsverbreitung oder für Krisenfälle genutzt werden. Dabei kann das Dialogsystem erkennen, ob es sich um Sprache oder eine Signalisierung handelt z.B. dass ein FAX-Inhalt in SMS, Text und Sprache gewandelt wird und anhand einer Anrufliste weitergeleitet wird.

Grundsätzlich kann es hierbei im Rahmen des erfindungsgemäßen Verfahrens auch vorgesehen sein, dass ein einlaufendes Kommunikationsgesuch von einem ersten Kommunikationsteilnehmer nicht nur an eine einzige alternative Netzwerkkennung, sondern gegebenenfalls auch an mehrere Netzwerkkennungen des zweiten Kommunikationsteilnehmers alternativ vermittelt wird.

So kann weiterhin die Wahrscheinlichkeit erhöht werden, einen Kommunikationsteilnehmer erreichen zu können.

Eines der besonderen Vorteile der erfinderischen Lösung ist, dass der Kunde oder Anrufer sich nicht um die alternativen Kommunikationswege und Formen kümmern muss, sondern dass dies von der erfinderischen Lösung vollzogen wird, wobei hier bestehende Daten oder weitere zu ermittelnde Daten herangezogen werden.

Bezüglich sämtlicher Ausführungen ist festzustellen, dass die in Verbindung mit der Ausführung genannten technischen Merkmale nicht nur bei der spezifischen Ausführung eingesetzt werden können, sondern auch bei den jeweils anderen Ausführungen. Sämtliche offenbarten technischen Merkmale dieser Erfindungsbeschreibung sind als erfindungswesentlich einzustufen und beliebig miteinander kombinierbar oder in Alleinstellung einsetzbar.

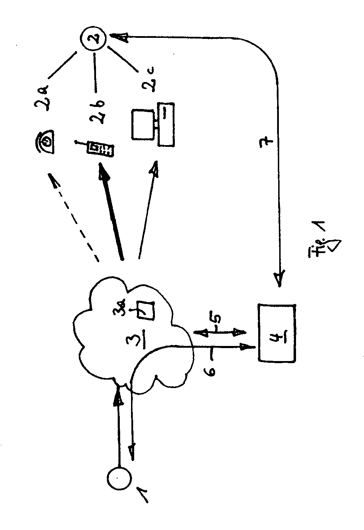

Ein Ausführungsbeispiel der Erfindung ist in der Figur 1 dargestellt.

In diesem Beispiel versucht der Kommunikationsteilnehmer 1 z.B. über ein Festnetztelefon über das Telekommunikationsnetzwerk 3 eine Verbindung aufzubauen zum Kommunikationsteilnehmer 2. Dieser Kommunikationsteilnehmer 2 kann in diesem Beispiel auf drei verschiedenen Wegen erreichbar sein, nämlich z.B. über eine Netzkennung, die seinem Telefonfestnetzanschluss 2a zugeordnet ist, d.h. eine CLI (Calling Line Identity), alternativ auch über sein Mobiltelefon 2b, dem als Netzkennung eine HLR, d.h. das Home Location Register zugeordnet ist und in weiterer Alternative per E-Mail über einen Computer 2c, dem eine IP-Adresse im Internet zugeordnet ist.

Die Möglichkeiten seiner Erreichbarkeit hat der zweite Telekommunikationsteilnehmer 2 über ein Webinterface 7 einem Sprachdialogsystem 4 mitgeteilt, so dass diese Informationen zum einen über die verschiedenen alternativen Netzwerkkennungen 2a, 2b und 2c sowie auch Informationen über die Erreichbarkeit zur Verfügung stehen. Beispielsweise kann der Kommunikationsteilnehmer 2 aktuell nicht über seinen Telefonfestnetzanschluss 2a erreichbar sein, da er sich im Urlaub befindet. Er hat jedoch sein Mobiltelefon 2b mitgenommen und ist grundsätzlich über E-Mail 2c zu erreichen. Für die Darstellung der Nichterreichbarkeit ist die Verbindung zum Festnetztelefon 2a vom Netzwerk 3 aus gestrichelt dargestellt.

Versucht nun der Kommunikationsteilnehmer 1 über das Telekommunikationsnetzwerk 3 eine Verbindung, z.B. zum Festnetztelefon 2a des Kommunikationsteilnehmers 2 aufzubauen, so ist dem Telekommunikationsnetzwerk bzw. einer darin angeordneten Vermittlungseinheit 3a aufgrund Informationsweiterleitung vom Sprachdialogsystem 4 wegen der Programmierung durch das Webinterface 7 bekannt, dass keine Erreichbarkeit zum Festnetztelefon 2a des zweiten Kommunikationsteilnehmers gegeben ist.

Durch das Telekommunikationsnetzwerk wird somit durch Weitervermittlung 5 an das Dialogsystem 4 ein Sprachdialog 6 zwischen dem Dialogsystem 4 und dem Kommunikationsteilnehmer 1 initiiert, um dem Kommunikationsteilnehmer 1 über die Nichterreichbarkeit zu informieren und weiterhin dem Kommunikationsteilnehmer 1 mitzuteilen, dass alternativ der Kommunikationsteilnehmer 2 auf seinem Mobiltelefon 2b bzw. per E-Mail 2c erreichbar ist. Der Kommunikationsteilnehmer 1 kann sodann über ein Sprachdialog 6 mit dem Dialogsystem 4 festlegen, mit welchem der alternativen Netzwerkkennungen die Weitervermittlung zum Kommunikationsteilnehmer 2 erfolgen soll.

Eine derartige Auswahl kann z.B. sprachgesteuert oder aber auch über eine Tonauswahl anhand der Tasten seines Telefons erfolgen. Das Sprachdialogsystem 4, welches die Auswahl nach dem Dialog 6 erhalten hat, gibt durch eine Rückinformation 5 an das Telekommunikationsnetzwerk 3 bzw. die darin befindliche Vermittlungsstelle 3a die Information weiter, dass der Kommunikationsteilnehmer 1 alternativ im vorliegenden Fall die Verbindung zum Mobiltelefon 2b wünscht, so dass die Weitervermittlung im folgenden sodann an das Mobiltelefon 2b erfolgt, was durch den dicker dargestellten Pfeil der Figur 1 symbolisiert wird.

Durch das erfindungsgemäße System bzw. Verfahren wird somit sicher gestellt, dass in dem Fall, wenn ein Kommunikationsteilnehmer eine Netzwerkkennung anwählt, unter der ein zweiter gewünschter Kommunikationsteilnehmer aktuell nicht erreichbar ist, dem ersten Kommunikationsteilnehmer Möglichkeiten aufgezeigt werden, den gewünschten Kommunikationsteilnehmer auf alternative Weisen zu erreichen.

Allgemein kann festgehalten werden, dass bezogen auf sämtliche vorbeschriebenen Ausführungsbeispiele konkreter oder allgemeiner Art die Vermittlung innerhalb des Telekommunikationsnetzwerkes bzw. der Vermittlungsstelle ausgeführt werden kann als so genannter pre- und postroute. So kann als ein preroute aufgrund der angewählten Netzwerkkennung eines zweiten Kommunikationsteilnehmers eine erste Vermittlung erfolgen zum Dialogsystem, welches sodann die Vermittlungsstelle mit einer alternativen Netzwerkkennung über die dann zu erfolgende Weitervermittlung (postroute) informiert.

Hierbei ist es vorteilhaft, dass es zwischen dem ersten anrufenden Telekommunikationsteilnehmer und dem Telekommunikationsnetzwerk nicht zu einem Abbau der Telekommunikationsverbindung kommt und der erste anwählende Kommunikationsteilnehmer zum Erreichen des gewünschten zweiten Kommunikationsteilnehmers eine Kommunikationsverbindung somit nicht erneut aufbauen muss.

## Patentansprüche

1. Verfahren zur Durchführung einer Telekommunikation eines ersten Kommunikationsteilnehmers (1) mit einem zweiten Kommunikationsteilnehmer (2) über wenigstens ein Telekommunikationsnetzwerk (3), wobei dem zweiten Kommunikationsteilnehmer (2) wenigstens zwei Netzwerkkennungen (2a, 2b, 2c) zugeordnet sind über die der zweite Kommunikationsteilnehmer (2) in einem Telekommunikationsnetzwerk (3) erreichbar ist und wobei dem zweiten Kommunikationsteilnehmer (2) wenigstens zu einer seiner Netzwerkkennungen (2a) zumindest zeitweise ein interaktives Dialogsystem (4) zugeordnet ist, mittels dem der erste Kommunikationsteilnehmer (1) durch Dialog die Vermittlung von einer zunächst angewählten Netzwerkkennung (2a) des zweiten Kommunikationsteilnehmers (2) auf eine andere alternative Netzwerkkennung (2b) bewirkt, **dadurch gekennzeichnet, dass** zu jeder Netzwerkkennung des zweiten Kommunikationsteilnehmers ein Zeiger gespeichert ist, der auf ein und dieselbe Liste verweist, in der alle möglichen Netzwerkkennungen des zweiten Kommunikationsteilnehmers gespeichert sind und bei Anwahl einer Netzwerkkennung eines gewünschten zweiten Kommunikationsteilnehmers das Dialogsystem aufgerufen wird, dem beim Aufruf diese Liste oder der auf die Liste weisende Zeiger als Übergabeparameter übergeben wird, so dass beim Aufruf das Dialogsystem Informationen über die in der Liste gespeicherten Netzwerkkennungen erhält.

2. Verfahren nach Anspruch 1, **dadurch gekennzeichnet, dass** das Dialogsystem (4) in wenigstens einem Telekommunikationsnetzwerk (3) (4) angeordnet ist und durch eine Software realisiert ist, die auf einer Datenverarbeitungsanlage abläuft, insbesondere auf einem Server einer Vermittlungsstelle.

3. Verfahren nach einem der vorherigen Ansprüche, **dadurch gekennzeichnet, dass** das Dialogsystem (4) aufgerufen wird, sofern der zweite Kommunikationsteilnehmer (2) unter der angewählten Netzwerkkennung (2a) nicht erreichbar bar.

4. Verfahren nach einem der vorherigen Ansprüche, **dadurch gekennzeichnet, dass** immer dasselbe Dialogsystem (4) aufgerufen wird, unabhängig davon, welche Netzwerkkennung (2a, 2b, 2c) des zweiten Kommunikationsteilnehmers (2) vom ersten Kommunikationsteilnehmer (1) angewählt wird.

5. Verfahren nach einem der vorherigen Ansprüche, **dadurch gekennzeichnet, dass** in einem Telekommunikationssystem eine Information über die aktuelle Erreichbarkeit des zweiten Kommunikationsteilnehmers (2) bezüglich wenigstens einer seiner Netzwerkkennungen (2a, 2b, 2c), insbesondere in der Liste / Datenbank gespeichert wird.

6. Verfahren nach Anspruch 5, **dadurch gekennzeichnet, dass** die Information zu einer Netzwerkkennung (2a, 2b, 2c) durch ein Telekommunikationsnetzwerk (3), insbesondere durch eine Vermittlungsstelle, selbst generiert und gespeichert wird, insbesondere sofern der zweite Kommunikationsteilnehmer (2) einen der Netzwerkkennung (2a, 2b, 2c) zugeordneten Anschluß aktuell nutzt.

7. Verfahren nach Anspruch 5 oder 6, **dadurch gekennzeichnet, dass** eine zu einer Netzwerkkennung (2a, 2b, 2c) des zweiten Kommunikationsteilnehmers (2) gehörende Information über die Erreichbarkeit durch den zweiten Kommunikationsteilnehrner (2) speicherbar ist, insbesondere mittels einer Benutzerschnittstelle, mittels der ein zweiter Kommunikationsteilnehmer (2) auf die Informationen, insbesondere eine Liste / Datenbank in einem Telekommunikationsnetzwerk (3) zugreifen kann.

8. Verfahren nach einem der vorherigen Ansprüche 5 bis 7, **dadurch gekennzeichnet, dass** ein erster Kommunikationsteilnehmer (1) bei einer Nichterreichbarkeit durch das Dialogsystem (4) eine Vermittlung zu einer alternativen Netzwerkkennung (2b) des zweiten Kommunikationsteilnehmers (2) angeboten erhält, insbesondere zu der eine Erreichbarkeit gespeichert ist.

9. Verfahren nach einem der vorherigen Ansprüche, **dadurch gekennzeichnet, dass** das Dialogsystem (4) in Abhängigkeit einer Triggerung und/oder der Sprache und/oder der Sprecher (des Sprechers) und/oder der Netzwerkkennung des ersten Kommunikationsteilnehmers (1) aufgerufen wird.

10. Verfahren nach Anspruch 9, **dadurch gekennzeichnet, dass** in einem Telekommunikationssystem, insbesondere zum Dialogsystem zugeordnet, eine Liste gespeichert ist, in der diejenigen Netzwerkkennungen (2a, 2b, 2c) von ersten Kommunikationsteilnehmern (1) gespeichert sind, bei denen ein Aufruf des Dialogsystems (4) unterbleibt.

11. Verfahren nach Anspruch 9 oder 10, **dadurch gekennzeichnet, dass** zu einer in einer Liste / Datenbank gespeicherten Netzwerkkennung (2a, 2b, 2c) eines zweiten Kommunikationsteilnehmers (2) wenigstens eine Netzwerkkennung eines möglichen ersten Kommunikationsteilnehmers (1) gespeichert ist, insbesondere wobei durch die Zuordnung der Netzwerkkennungen zueinander dem System angegeben wird, bei welchem ersten Kommunikationsteilnehmer (1) welche alternative Netzwerkkennung (2a, 2b, 2c) des zweiten Kommunikationsteilnehmers (2) während eines Dialog zur alternativen Vermittlung angeboten wird oder nicht angeboten wird.

12. Verfahren nach einem der vorherigen Ansprüche, **dadurch gekennzeichnet, dass** eine Weitervermittlung zu einer alternativen Netzwerkadresse (2b) des zweiten Kommunikationsteilnehmers (2) dem ersten Kommunikationsteilnehmer (1) in Rechnung gestellt wird, insbesondere wobei vor einer Weitervermittlung eine Rückfrage beim ersten Kommunikationsteilnehmer (1) erfolgt.

13. Verfahren nach einem der vorherigen Ansprüche, **dadurch gekennzeichnet, dass** eine Weitervermittlung zu einer alternativen Netzwerkadresse (2b) in Abhängigkeit einer Triggerung und/oder der Sprache und/oder der Sprecher (des Sprechers) und/oder der Netzwerkkennung erfolgt.

14. System zur Durchführung einer Telekommunikation eines ersten Kommunikationsteilnehmers (1) mit einem zweiten Kommunikationsteilnehmer (2) umfassend wenigstens ein Telekommunikationsnetzwerk (3), wobei dem zweiten Kommunikationsteilnehmer (2) wenigstens zwei Netzwerkkennungen (2a, 2b, 2c) zugeordnet sind über die der zweite Kommunikationsteilnehmer (2) in einem Telekommunikationsnetzwerk (3) erreichbar ist und wobei in einem Telekommunikationsnetzwerk (3) ein interaktives Dialogsystem (4) vorgesehen ist, welches dem zweiten Kommunikationsteilnehmer (2) wenigstens zeitweise zu einer seiner Netzwerkkennungen (2a) zugeordnet ist und mittels dem von dem ersten Kommunikationsteilnehmer (1) durch Dialog die Vermittlung von einer zunächst angewählten Netzwerkkennung (2a) des zweiten Kommunikationsteilnehmers (2) auf eine andere alternative Netzwerkkennung (2b) bewirkbar ist, **dadurch gekennzeichnet, dass** zu jeder Netzwerkkennung des zweiten Kommunikationsteilnehmers ein Zeiger gespeichert ist, der auf ein und dieselbe Liste verweist, in der alle möglichen Netzwerkkennungen des zweiten Kommunikationsteilnehmers gespeichert sind und das System eingerichtet ist, bei Anwahl einer Netzwerkkennung eines gewünschten zweiten Kommunikationsteilnehmers das Dialogsystem aufzurufen und beim Aufruf dem Dialogsystem diese Liste oder den auf die Liste weisenden Zeiger als Übergabeparameter zu übergeben, so dass beim Aufruf das Dialogsystem Informationen über die in der Liste gespeicherten Netzwerkkennungen erhält.

## Claims

1. Method for carrying out telecommunications between a first communication subscriber (1) and a second communication subscriber (2) via at least one telecommunications network (3), the second communication subscriber (2) being assigned at least two network identifiers (2a, 2b, 2c) which can be used to reach the second communication subscriber (2) in a telecommunications network (3), and the second communication subscriber (2) being at least temporarily assigned, at least for one of its network identifiers (2a), an interactive dialogue system (4), by means of which the first communication subscriber (1) switches from an initially dialled network identifier (2a) of the second communication subscriber (2) to another alternative network identifier (2b) by means of dialogue, **characterized in that** a pointer is stored for each network identifier of the second communication subscriber, which pointer refers to the same list in which all possible network identifiers of the second communication subscriber are stored, and the dialogue system is called up when a network identifier of a desired second communication subscriber is dialled, this list or the pointer referring to the list being transferred, as transfer parameters, to said dialogue system when it is called up, with the result that the dialogue system receives information relating to the network identifiers stored in the list when it is called up.

2. Method according to Claim 1, **characterized in that** the dialogue system (4) is arranged in at least one telecommunications network (3) and is implemented by means of software which runs on a data processing system, in particular on a server of a telephone exchange.

3. Method according to one of the preceding claims, **characterized in that** the dialogue system (4) is called up if the second communication subscriber (2) cannot be reached using the dialled network identifier (2a).

4. Method according to one of the preceding claims, **characterized in that** the same dialogue system (4) is always called up irrespective of which network identifier (2a, 2b, 2c) of the second communication subscriber (2) is dialled by the first communication subscriber (1).

5. Method according to one of the preceding claims, **characterized in that** an item of information relating to the current reachability of the second communication subscriber (2) with respect to at least one of its network identifiers (2a, 2b, 2c) is stored in a telecommunications system, in particular in the list/database.

6. Method according to Claim 5, **characterized in that** the information for a network identifier (2a, 2b, 2c) is generated and stored by a telecommunications network (3) itself, in particular by a telephone exchange, in particular if the second communication subscriber (2) is currently using a connection associated with the network identifier (2a, 2b, 2c).

7. Method according to Claim 5 or 6, **characterized in that** an item of information which belongs to a network identifier (2a, 2b, 2c) of the second communication subscriber (2) and relates to the reachability can be stored by the second communication subscriber (2), in particular using a user interface, by means of which a second communication subscriber (2) can access the information, in particular a list/database in a telecommunications network (3).

8. Method according to one of the preceding Claims 5 to 7, **characterized in that**, in the event of non-reachability, a first communication subscriber (1) is offered switching to an alternative network identifier (2b) of the second communication subscriber (2), in particular with respect to which reachability is stored, by the dialogue system (4).

9. Method according to one of the preceding claims, **characterized in that** the dialogue system (4) is called up on the basis of triggering and/or the language and/or the speaker(s) and/or the network identifier of the first communication subscriber (1).

10. Method according to Claim 9, **characterized in that** a list is stored in a telecommunications system, in particular in a manner associated with the dialogue system, which list stores those network identifiers (2a, 2b, 2c) of first communication subscribers (1) for which the dialogue system (4) is not called up.

11. Method according to Claim 9 or 10, **characterized in that**, for a network identifier (2a, 2b, 2c) of a second communication subscriber (2) which is stored in a list/database, at least one network identifier of a possible first communication subscriber (1) is stored, in which case, in particular, assigning the network identifiers to one another indicates to the system in which first communication subscriber (1) which alternative network identifier (2a, 2b, 2c) of the second communication subscriber (2) is or is not offered during a dialogue for alternative switching.

12. Method according to one of the preceding claims, **characterized in that** the first communication subscriber (1) is charged for forwarding to an alternative network address (2b) of the second communication subscriber (2), in which case, in particular, a query is raised with the first communication subscriber (1) before forwarding.

13. Method according to one of the preceding claims, **characterized in that** forwarding to an alternative network address (2b) is carried out on the basis of triggering and/or the language and/or the speaker(s) and/or the network identifier.

14. System for carrying out telecommunications between a first communication subscriber (1) and a second communication subscriber (2), comprising at least one telecommunications network (3), the second communication subscriber (2) being assigned at least two network identifiers (2a, 2b, 2c) which can be used to reach the second communication subscriber (2) in a telecommunications network (3), and an interactive dialogue system (4) being provided in a telecommunications network (3), which dialogue system is at least temporarily assigned to the second communication subscriber (2) for one of its network identifiers (2a) and can be used by the first communication subscriber (1) to switch from an initially dialled network identifier (2a) of the second communication subscriber (2) to another alternative network identifier (2b) by means of dialogue, **characterized in that** a pointer is stored for each network identifier of the second communication subscriber, which pointer refers to the same list in which all possible network identifiers of the second communication subscriber are stored, and the system is set up to call up the dialogue system when a network identifier of a desired second communication subscriber is dialled and to transfer this list or the pointer referring to the list, as transfer parameters, to said dialogue system when it is called up, with the result that the dialogue system receives information relating to the network identifiers stored in the list when it is called up.

## Revendications

1. Procédé destiné à effectuer une communication entre un premier participant à la communication (1) et un second participant à la communication (2) par l'intermédiaire d'au moins un réseau de télécommunication (3), dans lequel au moins deux identifiants de réseau (2a, 2b, 2c) sont associés au second participant à la communication (2), par l'intermédiaire desquels le second participant à la communication (2) est accessible dans un réseau de télécommunication (3) et dans lequel un système de dialogue interactif (4) est associé au second participant à la communication (2) au moins par intermittence pour au moins l'un de ses identifiants (2a), au moyen duquel le premier participant à la communication (1) provoque par un dialogue la commutation d'un identifiant de réseau (2a) initialement sélectionné du second participant à la communication (2) sur un autre identifiant de réseau (2b) différent, **caractérisé en ce que**, pour chaque identifiant de réseau du second participant à la communication, on stocke un pointeur pointant sur une seule et même liste dans laquelle sont stockés tous les identifiants de réseau possibles du second participant à la communication et **en ce que**, lors de la sélection d'un identifiant de réseau d'un second participant souhaité à la communication, le système de dialogue est appelé, système de dialogue auquel cette liste ou le pointeur pointant sur la liste lui est transféré en tant que paramètre de transfert de manière à ce que lors de l'appel, le système de dialogue reçoive des informations concernant les identifiants de réseau stockés dans la liste.

2. Procédé selon la revendication 1, **caractérisé en ce que** le système de dialogue (4) est prévu dans au moins un réseau de télécommunication (3) et est mis en oeuvre au moyen d'un logiciel qui s'exécute sur un système de traitement de données, notamment sur un serveur d'un central de commutation.

3. Procédé selon l'une quelconque des revendications précédentes, **caractérisé en ce que** le système de dialogue (4) est appelé si le second participant à la communication (2) n'est pas accessible avec l'identifiant de réseau (2a) sélectionné.

4. Procédé selon l'une quelconque des revendications précédentes, **caractérisé en ce que** le système de dialogue (4) est toujours lui-même appelé indépendamment de celui des identifiants de réseau (2a, 2b, 2c) du second participant à la communication (2) qui est sélectionné par le premier participant à la communication (1).

5. Procédé selon l'une quelconque des revendications précédentes, **caractérisé en ce que**, dans un système de télécommunication, une information concernant l'accessibilité du second participant à la communication (2) à l'instant présent pour au moins l'un de ses identifiants de réseau (2a, 2b, 2c) est notamment stockée dans la liste/banque de données.

6. Procédé selon la revendication 5, **caractérisé en ce que** l'information correspondant à un identifiant de réseau (2a, 2b, 2c) est elle-même générée et stockée par un réseau de télécommunication (3), notamment par un central de commutation, notamment si le second participant à la communication (2) utilise à l'instant présent une connexion associée à l'identifiant de réseau (2a, 2b, 2c).

7. Procédé selon la revendication 5 ou 6, **caractérisé en ce qu'**une information appartenant à un identifiant de réseau (2a, 2b, 2c) du second participant à la communication (2) et concernant l'accessibilité peut être stockée par le second participant à la communication (2), notamment au moyen d'une interface utilisateur au moyen de laquelle un second participant à la communication (2) peut accéder aux informations, notamment à une liste/banque de données dans un réseau de télécommunication (3).

8. Procédé selon l'une quelconque des revendications 5 à 7 précédentes, **caractérisé en ce qu'**il est proposé par le système de dialogue (4) à un premier participant à la communication (1), en cas de non-accessibilité, une commutation sur un autre identifiant de réseau (2b) du second participant à la communication (2), notamment sur celui pour lequel une accessibilité est stockée.

9. Procédé selon l'une quelconque des revendications précédentes, **caractérisé en ce que** le système de dialogue (4) est appelé en fonction d'un déclencheur et/ou de la langue et/ou des locuteurs (du locuteur) et/ou de l'identifiant de réseau du premier participant à la communication (1).

10. Procédé selon la revendication 9, **caractérisé en ce qu'**une liste, notamment associée au système de dialogue, est stockée dans un système de télécommunication, liste dans laquelle les identifiants de réseau (2a, 2b, 2c) pour lesquels un appel au système de dialogue (4) n'est pas effectué sont stockés par le premier participant à la communication (1).

11. Procédé selon la revendication 9 ou 10, **caractérisé en ce que**, pour un identifiant de réseau (2a, 2b, 2c) stocké dans une liste/une banque de données d'un second participant à la communication (2), au moins un identifiant de réseau d'un premier participant à la communication possible (1) est stocké, cela permettant notamment d'indiquer au système par l'intermédiaire de l'association les uns aux autres des identifiants de réseau, à quel premier participant à la communication (1) quel autre identifiant de réseau (2a, 2b, 2c) du second participant à la communication (2) a été proposé ou n'a pas été proposé pour une autre commutation pendant un dialogue.

12. Procédé selon l'une quelconque des revendications précédentes, **caractérisé en ce qu'**un transfert d'appel vers une autre adresse de réseau (2b) du second participant à la communication (2) est facturé au premier participant à la communication (1), un rappel au premier participant à la communication (1) étant notamment effectué avant un transfert d'appel.

13. Procédé selon l'une quelconque des revendications précédentes, **caractérisé en ce qu'**un transfert d'appel à une autre adresse de réseau (2b) est effectué en fonction d'un déclencheur et/ou de la langue et/ou des locuteurs (du locuteur) et/ou de l'identifiant de réseau.

14. Système destiné à effectuer une communication entre un premier participant à la communication (1) et un second participant à la communication (2) comprenant au moins un réseau de télécommunication (3), dans lequel au moins deux identifiants de réseau (2a, 2b, 2c) sont associés au second participant à la communication (2), par l'intermédiaire desquels le second participant à la communication (2) est accessible dans un réseau de télécommunication (3) et dans lequel il est prévu un système de dialogue interactif (4) dans un réseau de télécommunication (3), lequel système de dialogue est associé au second participant à la communication (2) au moins par intermittence pour l'un de ses identifiants (2a) et au moyen duquel une commutation peut être provoquée d'un identifiant de réseau initialement sélectionné (2a) du second participant à la communication (2) sur un autre identifiant de réseau (2b) par le premier participant à la communication (1) au moyen d'un dialogue, **caractérisé en ce que**, pour chaque identifiant de réseau du second participant à la communication, on stocke un pointeur pointant sur une seule et même liste dans laquelle sont stockés tous les identifiants de réseau possibles du second participant à la communication et **en ce que** le système est conçu pour appeler le système de dialogue lors de la sélection d'un identifiant de réseau d'un second participant souhaité à la communication et **en ce que** lors de l'appel, cette liste ou le pointeur pointant sur la liste est transféré au système de dialogue en tant que paramètre de transfert de manière à ce que lors de l'appel, le système de dialogue reçoive des informations concernant les identifiants de réseau stockés dans la liste.
